Europäisches Patentamt

European Patent Office

Office européen des brevets

(11) Veröffentlichungsnummer: **0 392 063**

**A1**

## (12) EUROPÄISCHE PATENTANMELDUNG

(21) Anmeldenummer: **89106701.9**

(22) Anmeldetag: **14.04.89**

(51) Int. Cl.⁵: **B62M 1/10**

(43) Veröffentlichungstag der Anmeldung:
**17.10.90 Patentblatt 90/42**

(84) Benannte Vertragsstaaten:
**AT BE CH DE ES FR GB GR IT LI LU NL SE**

(71) Anmelder: **Blättler, Arthur**
**Via Bagena 2**
**CH-6926 Montagnola(CH)**

(72) Erfinder: **Mascetti, Sergio**
**Via I Maggio 8**
**I-21020 Monvalle (Varese)(IT)**

(74) Vertreter: **Grättinger, Günter**
**Wittelsbacherstrasse 5 Postfach 16 49**
**D-8130 Starnberg(DE)**

(54) **Kurbel mit Totpunktüberwindung.**

(57) In einer Kurbel mit Totpunktüberwindung sind dem treibenden Teil und dem mit diesem drehbar verbundenen getriebenen Teil Druckfedern (14) zwischengeschaltet. Die Druckfedern (14) sind in Mulden (11) des als Gehäuse (4) ausgebildeten getriebenen Teils eingelegt und von einem Schild (3) des treibenden Teils vor Verschmutzung und Beschädigung geschützt.

Fig. 2

EP 0 392 063 A1

Die Erfindung betrifft eine Kurbel mit Totpunktüberwindung, bei welcher zwischen ein treibendes Teil und ein dazu koaxiales getriebenes Teil federnde Elemente zwischengeschaltet sind, sodaß das treibende Teil und das getriebene Teil zueinander um einen begrenzten Winkel verdrehbar sind.

Das mit einem Kurbelantrieb auf eine Welle übertragbare Drehmoment ist das Produkt aus der auf die Kurbel ausgeübten Kraft und des zur Kraftrichtung senkrechten Abstandes des Kraftangriffspunktes zur Drehachse der Welle. Im sogenannten "toten Punkt" der Kurbel, in welchem die Wirkungslinie der Kraft die Drehachse schneidet und in welchem daher der wirkende Hebelarm gleich Null ist, läßt sich kein Drehmoment auf die Welle übertragen. Dieses Phänomen tritt bei sämtlichen Systemen auf, bei welchen mittels einer Kurbel eine lineare Bewegung in eine rotierende umgesetzt wird, wie z.B. Hubkolbenmotoren, Pedalantriebe etc. Durch den "Totpunkt-Effekt" wird der Wirkungsgrad eines Kurbelantriebs nachteilig beeinflußt.

Eine gattungsgemäße Kurbel mit Totpunktüberwindung für den Anwendungsbereich von Fahrradantrieben ist aus der französischen Patentanmeldung Veröffentlichungsnr. 2 409 183 bekannt. Durch die Zwischenschaltung von federnden Elementen zwischen das treibende Teil und das dazu koaxiale getriebene Teil können das treibende Teil und das getriebene Teil zueinander um einen begrenzten Winkel verdreht werden, sodaß das Pedal bei unveränderter Stellung des Kettenrades aus der Totpunktlage heraus gedreht werden kann. Als federnde Elemente sind zwischen dem Pedal und dem Kettenrad angeordnete, auf Zug belastete Schraubenfedern vorgesehen; bei einer anderen Ausführungsform ist zwischen dem Pedal und dem Kettenrad eine Spiralfeder angeordnet. Andere Ausführungsformen der federnden Elemente ebenfalls für die Verwendung in Tretkurbelgetrieben sind in den europäischen Patentanmeldungen mit den Veröffentlichungsnummern 0 203 054 und 0 213 115 beschrieben; dabei handelt es sich um radial angeordnete Blattfedern einerseits und um einen Federring andererseits.

Bei den bekannten Ausführungsformen ist es nachteilig, daß die federnden Elemente entweder vollkommen (FR-A-2 409 183, Fig. 1; EP-A-0 203 054) oder weitgehend ungeschützt (EP-A-0 213 115) angeordnet sind. Insbesondere bei der Verwendung bei Fahrrädern kann diese ungeschützte Anordnung zu rascher Verschmutzung und damit Funktionsbeeinträchtigung führen; auch ist die Beschädigung der ungeschützt angeordneten federnden Elemente leicht möglich. Darüberhinaus werden in den bekannten Anordnungen weitgehend aufwendige, ausschließlich für -den speziellen Einsatzzweck gefertigte federnde Elemente eingesetzt, deren Herstellung hohe Kosten verursacht und deren Austausch aufwendig ist.

Der vorliegenden Erfindung liegt die Aufgabe zugrunde, eine gattungsgemäße Kurbel mit Totpunktüberwindung so auszugestalten, daß standardisierte, kostengünstige federnde Elemente verwendet werden können, die darüberhinaus problemlos ausgewechselt werden können und die dennoch während des Betriebs geschützt angeordnet sind.

Diese Aufgabe wird erfindungsgemäß dadurch gelöst, daß die federnden Elemente in Umfangsrichtung angeordnete Druckfedern sind, welche in Mulden des als Gehäuse ausgebildeten getriebenen Teils aufgenommen sind, und daß das treibende Teil einen die Mulden abdeckenden Schild besitzt, an welchem auf die Druckfedern wirkende Druckstücke befestigt sind.

Durch die Abdeckung der die Druckfedern aufnehmenden Mulden durch einen Schild werden die Federn nicht nur vor Verschmutzung und Beschädigung geschützt; darüberhinaus ergibt sich auch eine glatte Oberfläche der gesamten Anordnung, welche im Falle der Verwendung in einem Fahrrad sowohl den Strömungswiderstand herabsetzt als auch die Verletzungsgefahr wegen hervorstehender Teile verringert. Auf Druck belastete Federn werden in vielfältigen Ausführungsformen mit unterschiedlichsten Federcharakteristiken hergestellt und vertrieben, sodaß eine optimale Anpaßbarkeit der federnden Wirkung der erfindungsgemäßen Kurbel mit Totpunktüberwindung an die jeweiligen Anforderungen durch einfachen Austausch der Federn möglich ist. Je nach Höhe des zu übertragenden Drehmoments können die Mulden des gleichen Gehäuses beispielsweise in einem Anwendungsfall Tellerfedern und im anderen Anwendungsfall Schraubenfedern aufnehmen. Insbesondere bei der Verwendung bei Fahrrädern kann somit die Nachgiebigkeit der erfindungsgemäßen Kurbel mit Totpunktüberwindung mit einfachsten Mitteln sowohl an den jeweiligen Fahrer als auch an die Streckenverhältnisse, z.B. zu überwindende Steigungen angepaßt werden. Da die Federn lediglich in die Mulden eingelegt zu werden brauchen, wonach das Gehäuse durch den Schild abgedeckt wird, ist die Anpassung besonders rasch zu bewerkstelligen.

Bevorzugte Ausführungsformen der erfindungsgemäßen Kurbel mit Totpunktüberwindung besitzen ein treibendes Teil, welches eine Nabe aufweist; diese Nabe kann in einer Bohrung des getriebenen Teils gleitend oder über ein Rollenlager geführt sein. Bei der Verwendung der erfindungsgemäßen Kurbel mit Totpunktüberwindung bei Hubkolbenmotoren wird die Lagerung zwischen dem treibenden Teil und dem getriebenen Teil zweckmäßigerweise in den Schmierungskreislauf des Motors integriert.

Für bestimmte Anwendungsbereiche kann es vorteilhaft sein, Druckfedern mit einer nicht-linearen Federcharakteristik zu verwenden; z.B. kann die Verwendung von Druckfedern mit progressiver Federcharakteristik vorteilhaft sein.

Zweckmäßigerweise stützen sich die Druckfedern über Gegenlager am Gehäuse ab, welche an die Form der Mulde angepaßt sind und welche gegebenenfalls einen in die Seele der Druckfeder hineinragenden Ansatz besitzen, der die Feder führt. Bei abgenommenem Schild erfolgt bei dieser Ausführungsform der Austausch der Federn dadurch, daß die Einheit aus Druckfeder, Druckstück und Gegenlager in die im Gehäuse angeordnete Mulde eingelegt wird. Die kraftschlüssige Verbindung zwischen dem Schild und dem Druckstück kann dabei z.B. mittels Bolzen erfolgen, welche mit dem Schild fest verbunden sind und welche in in den Druckstücken angeordnete Bohrungen eingreifen. Durch die drehbare Verbindung zwischen den Druckstücken und den Bolzen bzw. den Gegenlagern und abgerundeten Enden der Mulden wird gewährleistet, daß die Druckfeder beim Zusammendrücken nicht verbogen wird, nachdem beide Endeinspannungen keine Momente aufnehmen können. Ein bevorzugtes Material für die Herstellung der Druckstücke und der Gegenlager ist abriebfester Kunststoff, wie z.B. PTFE.

Besonders bei Verwendung der erfindungsgemäßen Kurbel mit Totpunktüberwindung im Zusammenhang mit Fahrrädern ist es vorteilhaft, wenn ein zur Aufnahme eines Pedals ausgebildeter Kurbelarm einstückig mit dem Schild hergestellt wird. Als Herstellungsverfahren ist z.B. ein Aluminiumgießverfahren geeignet, wodurch das so hergestellte treibende Teil bei hoher Stabilität ein geringes Gewicht besitzt. Da Verbindungselemente zwischen dem Kurbelarm und dem Schild bei dieser Ausführungsform nicht erforderlich sind, kann das treibende Teil abgerundet und somit eine mögliche Verletzungsgefahr mindernd hergestellt werden.

Eine bevorzugte Ausführungsform der Kurbel mit Totpunktüberwindung zur Verwendung in Fahrrädern ist so ausgestaltet, daß das treibende Teil und das getriebene Teil um einen maximalen Winkel von ca. 35° gegeneinander verdreht werden können. Dieser Winkel hat sich unter den beim Fahrradfahren herrschenden kinematischen Bedingungen als optimal herausgestellt.

Wie bereits oben dargestellt ist die Montage der erfindungsgemäßen Kurbel mit Totpunktüberwindung dann besonders einfach, wenn zunächst die aus den Druckfedern, den Druckstücken und den Gegenlagern bestehenden Einheiten in die Mulden eingelegt werden können und anschließend der Schild auf das Gehäuse aufgesetzt wird. Zu diesem Zweck besitzt der Schild zweckmäßigerweise axial vorspringende Verbindungselemente, die in die Druckstücke eingreifen. Eine besonders zweckmäßige Ausführungsform der Verbindungselemente besteht aus mit dem Schild fest verbundenen Bolzen, welche in entsprechende Bohrungen in den Druckstücken drehbar eingreifen. Die Mulden sind in diesem Fall so geformt, daß die Bolzen und die Druckstücke in dem Gehäuse auf einer Kreisbahn geführt werden können.

Die Verbindungselemente können auf dem Schild auch radial verschiebbar geführt sein. Dies gestattet es, -die Mulden so zu gestalten, daß die Druckstücke in -ihnen linear geführt werden.

Bei einer anderen vorteilhaften Ausführungsform sind die Druckstücke mit dem Schild einstückig verbunden und insbesondere als in die jeweilige Mulde des Gehäuses hineinragende Vorsprünge ausgebildet. Die beispielsweise an den Schild angegossenen Vorsprünge besitzen dabei eine Anschlagfläche für das zugeordnete Ende der Druckfeder. Diese Ausführungsform bietet insbesondere hinsichtlich der Fertigungskosten Vorteile.

Im Falle der Verwendung der erfindungsgemäßen Kurbel mit Totpunktüberwindung bei Fahrrädern besitzt der Schild zweckmäßigerweise ein Vierkant-Loch, welches einen als Vierkant ausgebildeten Endabschnitt einer mit einer zweiten Kurbel verbundenen Welle drehfest aufnehmen kann. Auf diese Weise läßt sich eine besonders einfache Verbindung der beiden Tretkurbeln miteinander bewerkstelligen, und Kurbelarme mit unterschiedlichen Radien lassen sich rasch gegeneinander austauschen. Der Zahnkranz bzw. die Zahnkränze sind vorteilhafterweise lösbar auf einem auf dem Gehäuse angeordneten Bund befestigt.

Im folgenden wird eine Ausführungsform der Erfindung unter Bezugnahme auf die Zeichnung näher beschrieben, wobei

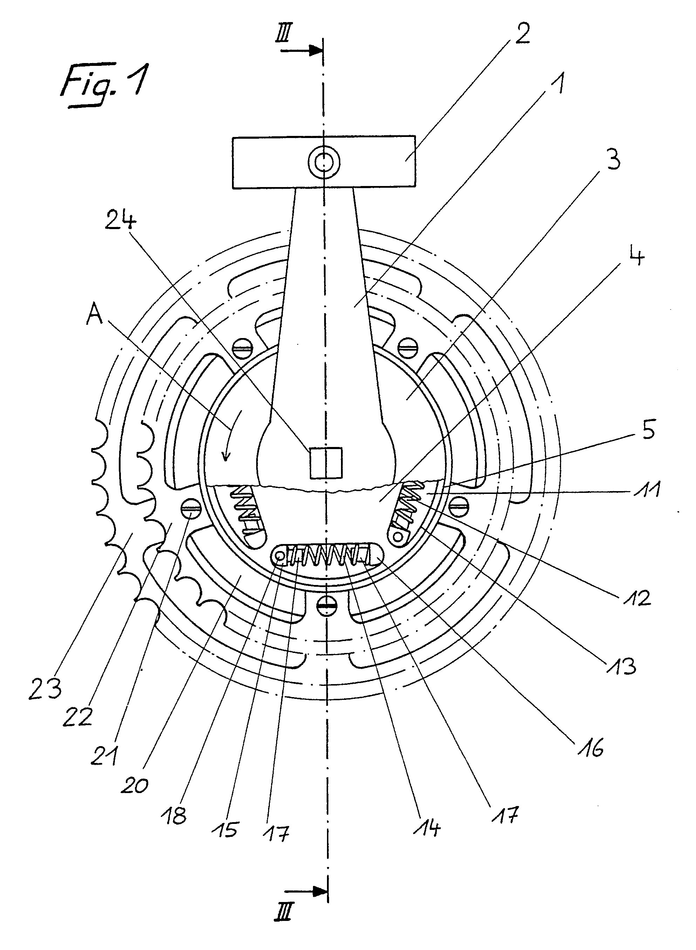

Fig. 1 die Kurbel mit Totpunktüberwindung in ihrer Totpunktstellung zeigt,

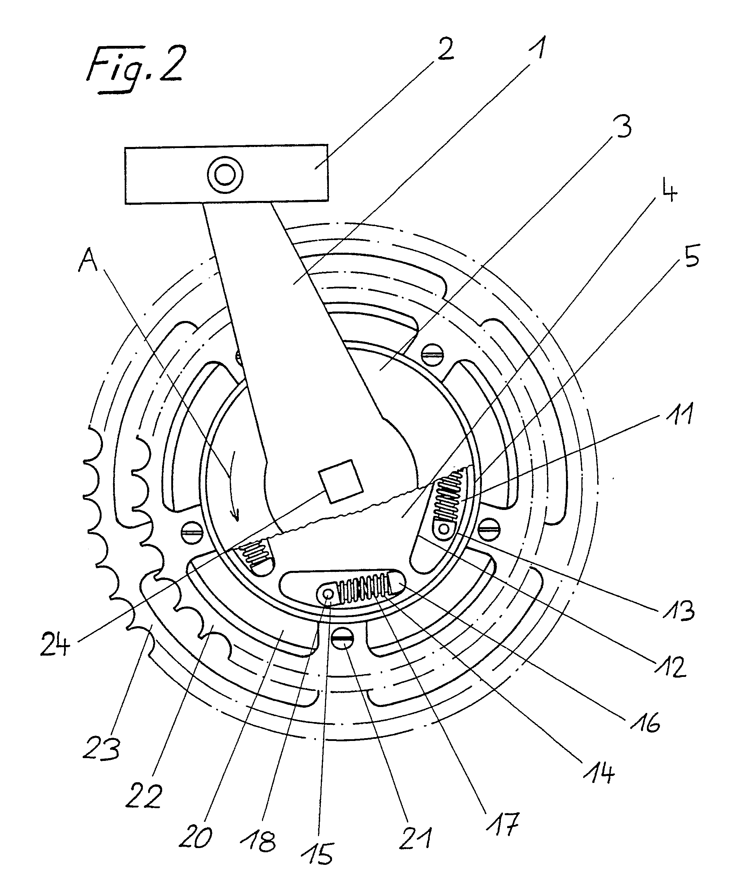

Fig. 2 die Anordnung gemäß Fig. 1 darstellt, wobei das angetriebene Teil unter Krafteinwirkung aus der Totpunktlage herausgeschwenkt ist,

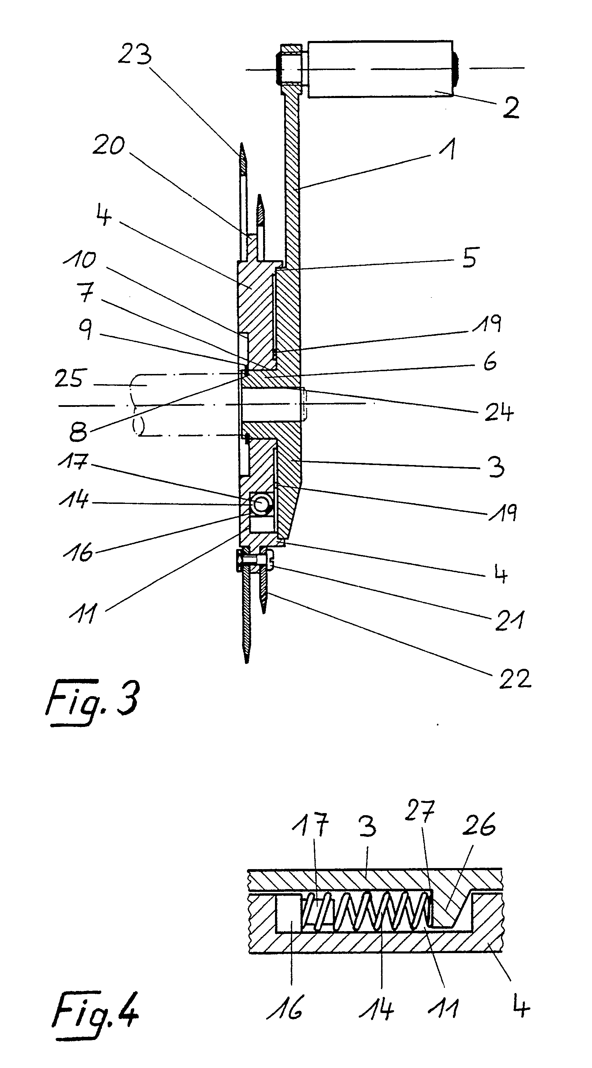

Fig. 3 einen Schnitt gemäß der Linie III-III der Fig. 1 zeigt und

Fig. 4 eine alternative Ausführungsform der Anordnung der Druckstücke auf den Schild zeigt.

Der Kurbelarm (1), welcher an seinem freien Ende ein drehbares Pedal (2) trägt, ist mit einem kreisförmigen Schild (3) fest verbunden. Das Gehäuse (4) besitzt einen kreisförmigen Absatz (5), der so dimensioniert ist, daß er den kreisförmigen Schild (3) teilweise aufnehmen kann. Eine an den Schild zentral angeformte Nabe (6) durchsetzt eine zentrale Bohrung (7) des Gehäuses (4) und ist in dieser gelagert. Ein in eine Nut (8) der Nabe (6) eingelegter Sicherungsring (9) wirkt mit einem Absatz (10) des Gehäuses (4) zusammen und sichert das treibende Teil und das getriebene Teil axial gegeneinander.

Das Gehäuse besitzt fünf Mulden (11), welche sich gleichmäßig über dessen Umfang verteilen. Die Mulden sind auf ihrem radial inneren Abschnitt (12) gradlinig und auf ihrem radial äußeren Abschnitt (13) kreisbogenförmig begrenzt, wobei der Krümmungsmittelpunkt auf der Drehachse liegt; die Enden der Mulden (11) sind rund ausgeformt. Die Mulden (11) sind in dem Gehäuse (4) so angeordnet, daß sie von dem Schild (3) vollständig abgedeckt werden. In die Mulden (11) sind Einheiten eingelegt, die aus Schraubendruckfedern (14), Druckstücken (15) und Gegenlagern (16) bestehen, wobei die Druckstücke die - bezüglich der Drehrichtung A - hinteren Enden der Druckfedern (14), die Gegenlager (16) deren vordere Enden aufnehmen. Druckstücke (15) sowie Gegenlager (16) besitzen Ansätze (17), welche in die Seelen der Druckfedern (14) hineinragen und diese führen. Auf diese Weise wird ein Durchbiegen der zusammengedrückten Druckfedern (14) verhindert.

Die Druckstücke (15) besitzen Bohrungen (18), in welche auf dem Schild (3) fest angeordnete, axial nach innen gerichtete Bolzen (19) eingreifen, welche das -über das Pedal (2) auf den Schild (3) ausgeübte Drehmoment über die Druckstücke (15) und die Druckfedern (14) in das Gehäuse (4) einleiten.

Umlaufend um das Gehäuse ist ein Bund (20) angeordnet, an welchem mittels Schraubverbindungen (21) Zahnkränze (22, 23) befestigt sind.

In dem Schild (3) und der Nabe (6) ist zentral ein Vierkant-Loch (24) angeordnet, welches dazu dient, über eine Welle (25) eine drehfeste Verbindung zu dem -zweiten Pedal herzustellen.

Bei der in Fig. 4 dargestellten Ausführungsform der Anordnung der Druckstücke werden diese durch mit dem Schild (3) einstückig verbundene Vorsprünge (26) gebildet, welche in die Mulden (11) hineinragen. Die Vorsprünge (26) besitzen dabei Anschlagflächen (27) für die jeweilige Feder (14). Im übrigen stimmt diese Anordnung mit der vorstehend beschriebenen überein, so daß auf die entsprechenden Ausführungen Bezug genommen wird.

## Ansprüche

1. Kurbel mit Totpunktüberwindung, bei welcher zwischen ein treibendes Teil und ein dazu koaxiales getriebenes Teil federnde Elemente zwischengeschaltet sind, sodaß das treibende Teil und das getriebene Teil zueinander um einen begrenzten Winkel verdrehbar sind,
dadurch gekennzeichnet,
daß die federnden Elemente in Umfangsrichtung angeordnete Druckfedern (14) sind, welche in Mulden (11) des als Gehäuse (4) ausgebildeten getriebenen Teils aufgenommen sind, und daß das treibende Teil einen die Mulden (11) des Gehäuses (4) abdeckenden Schild (3) besitzt, an welchem auf die Druckfedern (14) wirkende Druckstücke (15) befestigt sind.

2. Kurbel mit Totpunktüberwindung gemäß Anspruch 1,
dadurch gekennzeichnet,
daß das treibende Teil über eine Nabe (6) gleitend in einer Bohrung (7) des Gehäuses (4) geführt ist.

3. Kurbel mit Totpunktüberwindung gemäß Anspruch 1,
dadurch gekennzeichnet,
daß das treibende Teil über ein zwischen einer Nabe (6) des treibenden Teils und einer Bohrung (7) des Gehäuses (4) angeordnetes Rollenlager geführt ist.

4. Kurbel mit Totpunktüberwindung gemäß einem der vorausgehenden Ansprüche,
dadurch gekennzeichnet,
daß die Druckfedern (14) Schraubenfedern sind.

5. Kurbel mit Totpunktüberwindung gemäß einem der Ansprüche 1 bis 3,
dadurch gekennzeichnet,
daß die Druckfedern (14) Tellerfedern sind.

6. Kurbel mit Totpunktüberwindung gemäß einem der vorausgehenden Ansprüche,
dadurch gekennzeichnet,
daß die Druckfedern (14) eine progressive Federcharakteristik besitzen.

7. Kurbel mit Totpunktüberwindung gemäß einem der vorausgehenden Ansprüche,
dadurch gekennzeichnet,
daß die Druckfedern (14) sich über in die Mulden (11) eingelegte Gegenlager (16) am Gehäuse (4) abstützen und daß die Druckstücke (15) und die Gegenlager (16) aus einem abriebfesten Kunststoff hergestellt sind.

8. Kurbel mit Totpunktüberwindung gemäß einem der vorausgehenden Ansprüche,
dadurch gekennzeichnet,
daß mit dem Schild (3) fest verbundene Bolzen (19) drehbar in Bohrungen (18) in den Druckstükken (15) eingreifen und daß die Mulden (11) so geformt sind, daß die Druckstücke (15) beim Zusammendrücken der Federn auf einer Kreisbahn bewegt werden können.

9. Kurbel mit Totpunktüberwindung gemäß einem der Ansprüche 1 bis 7,
dadurch gekennzeichnet,
daß die Druckstücke (15) auf dem Schild (3) radial verschieblich geführt sind, so daß sie beim Zusammendrücken der Federn in entsprechend geformten Mulden (11) lineare Bewegungen ausführen können.

10. Kurbel mit Totpunktüberwindung gemäß einem der vorausgehenden Ansprüche zur Verwendung in Fahrrädern,

dadurch gekennzeichnet,
daß das treibende Teil einen zur Aufnahme eines Pedals (2) ausgebildeten Kurbelarm (1) besitzt, welcher mit dem Schild (3) einstückig hergestellt ist.

11. Kurbel mit Totpunktüberwindung gemäß Anspruch 10,
dadurch gekennzeichnet,
daß das treibende Teil und das getriebene Teil um einen maximalen Winkel von ca. 35° zueinander verdrehbar sind.

12. Kurbel mit Totpunktüberwindung gemäß einem der Ansprüche 10 oder 11,
dadurch gekennzeichnet,
daß der Schild (3) und/oder die Nabe (6) des treibenden Teils ein Vierkant-Loch (24) besitzen, welches einen als Vierkant ausgebildeten Endabschnitt einer mit einer zweiten Kurbel verbundenen Welle (25) drehfest aufnehmen kann.

13. Kurbel mit Totpunktüberwindung gemäß einem der Ansprüche 10 bis 12,
dadurch gekennzeichnet,
daß das Gehäuse (4) mindestens einen Bund (20) besitzt, an welchem ein oder mehrere Zahnkränze (22, 23) befestigt werden können.

14. Kurbel mit Totpunktüberwindung gemäß einem der Ansprüche 1 bis 7,
dadurch gekennzeichnet,
daß die Druckstücke (15) als mit dem Schild (3) einstückig verbundene, in die jeweilige Mulde (11) des Gehäuses (4) hineinragende Vorsprünge (26) ausgebildet sind, welche eine Anschlagfläche (27) für das zugeordnete Ende der Druckfeder (14) aufweisen.

*Fig. 1*

Fig.2

**Fig. 3**

**Fig. 4**

# EUROPÄISCHER RECHERCHENBERICHT

Europäisches Patentamt

Nummer der Anmeldung

EP 89 10 6701

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A- 368 046 (L. PROUST) <br> * Insgesamt * | 1,4,10 | B 62 M 1/10 |
| A | | 8,14 | |
| | --- | | |
| Y | GB-A- 415 636 (J. ENDERSEN) <br> * Seite 2, Zeilen 31-66; Ansprüche 1,2; Figuren 1-7 * | 1,4,10 | |
| A | | 2,3,7, 13 | |
| | --- | | |
| A | GB-A- 415 272 (J. ENDERSEN) <br> * Ansprüche 1,2,5,6; Figuren 1-7 * | 1,4,7, 10,13 | |
| | --- | | |
| A | FR-E- 52 085 (F. JOSSERAND) <br> * Insgesamt * | 1,4,7,8 ,10,14 | |
| | --- | | |
| A | US-A-3 828 621 (K. UCHINO) <br> * Ansprüche 1,2; Figur 2 * | 1,4,6, 10 | |
| | ----- | | |

**RECHERCHIERTE SACHGEBIETE (Int. Cl.5)**

B 62 M
F 16 H
F 01 B
F 16 C

Der vorliegende Recherchenbericht wurde für alle Patentansprüche erstellt

| Recherchenort | Abschlußdatum der Recherche | Prüfer |
|---|---|---|
| DEN HAAG | 14-12-1989 | SINGER G.M. |

EPO FORM 1503 03.82 (P0403)